(19) Europäisches Patentamt / European Patent Office / Office européen des brevets

(11) **EP 2 320 404 B1**

(12) **FASCICULE DE BREVET EUROPEEN**

(45) Date de publication et mention
de la délivrance du brevet:
**27.03.2013 Bulletin 2013/13**

(51) Int Cl.:
***G08G 1/01*** *(2006.01)*  ***G08G 1/04*** *(2006.01)*
***G06T 7/20*** *(2006.01)*

(21) Numéro de dépôt: **10290567.6**

(22) Date de dépôt: **20.10.2010**

(54) **Procédé et dispositif pour la mesure de la trajectoire d'objets mobiles passifs**

Verfahren und Vorrichtung zur Vermessung der Trajektorie eines passiven mobilen Objekts

Method and apparatus for trajectory measuring of a passive mobile object

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.10.2009 FR 0905153**

(43) Date de publication de la demande:
**11.05.2011 Bulletin 2011/19**

(73) Titulaires:
• **Centre National de la Recherche Scientifique
75016 Paris (FR)**
• **Institut Français des Sciences et Technologies
des
Transports, de l'Amenagement et des Reseaux
77420 Champs sur Marne (FR)**
• **Université Blaise Pascal - Clermont-Ferrand II
63006 Clermont-Ferrand Cedex (FR)**

(72) Inventeurs:
• **Chateau, Thierry
63460 Combronde (FR)**
• **Goyat, Yann
44770 La Plaine sur Mer (FR)**
• **Trassoudaine, Laurent René
63450 Saint-Amand Tallende (FR)**

• **Malaterre, Laurent
63730 Mirefleurs (FR)**

(74) Mandataire: **Corret, Hélène et al
Cabinet Orès
36, rue de St Pétersbourg
75008 Paris (FR)**

(56) Documents cités:
**US-A1- 2006 177 099     US-B1- 6 718 259**

• **GOYAT Y ET AL: "Tracking of vehicle trajectory
by combining a camera and a laser rangefinder",
MACHINE VISION AND APPLICATIONS,
SPRINGER, BERLIN, DE, vol. 21, no. 3, 26 mars
2009 (2009-03-26), pages 275-286, XP019797436,
ISSN: 1432-1769**
• **KOLLER D ET AL: "MODEL-BASED OBJECT
TRACKING IN MONOCULAR IMAGE
SEQUENCES OF ROAD TRAFFIC SCENES",
INTERNATIONAL JOURNAL OF COMPUTER
VISION, KLUWER ACADEMIC PUBLISHERS,
NORWELL, US LNKD- DOI:10.1007/BF01539538,
vol. 10, no. 3, 1 juin 1993 (1993-06-01), pages
257-281, XP000378021, ISSN: 0920-5691**

**Description**

La présente invention concerne un procédé et un dispositif pour la mesure de la trajectoire d'objets mobiles passifs, notamment de véhicules se déplaçant sur une chaussée.

On entend par objets mobiles passifs des objets non munis de capteurs. Dans l'ensemble de la description, les objets mobiles considérés seront toujours de type passif, sauf indication contraire.

Les gestionnaires routiers souhaitent en permanence améliorer la sécurité de leur réseau routier. Pour cela, ils ont besoin de connaître les conditions de circulation sur certains sites, notamment pour comprendre les raisons des accidents survenus ou pour identifier les risques d'accident. A partir de ces connaissances, des améliorations peuvent être apportées au réseau routier, par exemple pour réduire, voire supprimer des causes d'accident.

On connaît déjà quelques systèmes utilisés par les gestionnaires routiers.

Il s'agit tout d'abord des radars, éventuellement associés à un télémètre laser, qui donnent une mesure précise mais ponctuelle de la vitesse d'un véhicule.

On peut également citer les systèmes d'assistance à la vidéo-surveillance qui donnent une mesure de la vitesse sur une longueur importante mais qui n'est pas précise. Ce type de mesure est typiquement affiché sur des panneaux lumineux disposés le long des routes pour appeler les conducteurs à réduire leur vitesse.

On connaît également des dispositifs permettant de mesurer, de façon précise, la position latérale d'un véhicule.

Il s'agit de boucles électromagnétiques décalées qui sont généralement ancrées dans la chaussée.

Un dispositif de ce type présente des inconvénients. Tout d'abord, il ne permet de mesurer la position latérale que sur une largeur d'environ 1 mètre. De plus, des boucles magnétiques synchronisées doivent être prévues le long de toute la chaussée sur laquelle la circulation est étudiée. Enfin, l'installation des boucles magnétiques nécessite des travaux de génie civil importants, puisqu'il faut réaliser des tranchées pour les enterrer. Ces travaux sont coûteux et nécessitent de fermer la route aux usagers, ce qui gène le trafic.

De surcroît, pour éviter des travaux supplémentaires, ces boucles électromagnétiques ne sont plus déplacées après leur installation dans la chaussée et elles ne sont donc pas réutilisées dans un autre site.

Ainsi, les systèmes connus pour les réseaux routiers n'apportent que des informations limitées puisqu'ils ne permettent pas d'estimer la trajectoire complète d'un véhicule. Par ailleurs, les informations ne sont pas toujours précises et les systèmes ne peuvent pas être systématiquement déplacés d'un site à l'autre.

Par ailleurs, on connaît des procédés de mesure de la trajectoire d'un objet mobile, basés sur l'utilisation de séquences vidéos de l'objet enregistrées lors de son déplacement.

Ainsi, le procédé dit de suivi par détection permet d'analyser chaque image individuellement et indépendamment des autres, pour en déduire la position de l'objet au moment où l'image a été enregistrée. La trajectoire de l'objet, c'est-à-dire la fonction qui, à tout instant t, associe la position d'un point de l'objet à suivre, est ensuite déduite de l'ensemble des positions successives.

Aucune application pratique de ce procédé n'est connue.

En effet, ce procédé nécessite le traitement d'un nombre important de données.

Par ailleurs, la précision des résultats obtenus est faible car ce procédé ne permet pas de limiter la zone de recherche. Ainsi, le risque d'erreur dû au bruit est important. La précision dépend donc fortement de la qualité des images.

En effet, la présence d'ombres notamment peut fausser la détection de la position de l'objet et rendre la courbe obtenue, censée illustrer la trajectoire de l'objet, dénuée de toute pertinence.

Il en est de même lorsque plusieurs objets sont présents sur une même image.

Un autre procédé dit de suivi séquentiel itératif est utilisé notamment dans des applications robotiques pour la commande en temps réel de robots. Il permet d'estimer l'état d'un objet à un moment donné, en fonction des données enregistrées jusqu'à ce moment là, ainsi que des positions préalablement estimées.

Une application dans le domaine routier a été décrite dans l'article « trajectory measurement of vehicles : a new observation » Y. Goyat. T. Château, L. Trassoudaine, L. Malaterre, A. Riouall, paru dans le compte rendu de la conférence RSS (Road Safety and Simulation), 2007.

Dans certains cas, la trajectoire est estimée avec une précision insuffisante.

Une autre application a été décrite dans l'article "Tracking of vehicle trajectory by combining a camera and a laser rangefinder", Y. Goyat, T. Chateau, L. Trassoudaine, paru dans le journal "Machine Vision and Applications", vol. 21, 2010 et publié antérieurement en ligne en 2009. Dans cet article, un système de mesure de la trajectoire d'un objet mobile est décrit avec au moins un capteur d'images, une mémoire pour enregistrer les données issues du capteur d'images, des moyens de traitement des données et des moyens d'affichage de la trajectoire modèle retenue selon le préambule de la revendication 16. Dans cet article, des trajectoires modèles sont générées avec un filtre particulaire (aussi connu comme "Méthode de Monte-Carlo séquentielle") qui demande des processeurs très performants.

L'invention a donc pour objet de pallier les inconvénients des procédés et des systèmes connus, en proposant un système qui peut être déplacé facilement et rapidement d'un site d'observation à l'autre et qui donne des informations complètes et précises sur la trajectoire d'un objet mobile dans un site donné.

L'invention a également pour objet un procédé mis en oeuvre grâce à ce système qui permet de mesurer la trajectoire d'un objet mobile passif, avec une précision importante et qui permet de réduire considérablement le temps de traitement des données utilisées.

Ainsi, l'invention concerne un procédé de mesure de la trajectoire d'un objet mobile passif dans un site déterminé, comprenant les étapes suivantes :

(a) l'acquisition de données relatives au déplacement dudit objet dans ledit site, ces données incluant au moins des images successives dudit objet lors de son déplacement

(b) l'enregistrement desdites données

(c) la fixation d'une trajectoire modèle initiale

(d) la comparaison entre la trajectoire modèle initiale et chaque image, pour déterminer un indice de vraisemblance ($C_0$) de la trajectoire initiale ($T_0$)

(e) la génération d'une première trajectoire modèle ($T_1$) à partir de la trajectoire modèle initiale ($T_0$)

(f) la comparaison entre la première trajectoire modèle ($T_1$) et chaque image des données enregistrées pour déterminer un indice de vraisemblance ($C_1$) de la première trajectoire modèle

(g) le choix entre les trajectoires $T_0$ et $T_1$, en fonction du rapport $C_1/C_0$

(h) la génération d'une nouvelle trajectoire modèle, sur la base de la trajectoire retenue

(i) la répétition des étapes (f), (g) et (h), de façon à générer n trajectoires modèles ($T_{i, i = 2 \text{ à } n}$), avec un indice de vraisemblance ($C_{i, i = 2 \text{ à } n}$), n étant un nombre entier supérieur à 2

(j) le choix entre les n trajectoires modèles, en fonction de leur indice de vraisemblance.

De façon préférée, à l'étape (a), les données sont détectées dans un repère GPS.

A l'étape (c), dans une première variante, la trajectoire modèle initiale est indépendante du site dans lequel le procédé est mis en oeuvre et dans une deuxième variante, la trajectoire modèle initiale est déterminée en fonction des caractéristiques du site.

De façon préférée, aux étapes (d) et (f), la comparaison entre une trajectoire modèle et les images enregistrées s'effectue image par image, en associant chacune d'elles au point correspondant de la trajectoire modèle, en fonction du temps.

Ainsi, chaque point de la trajectoire modèle étant représenté par un modèle de véhicule, la comparaison consiste à déterminer le pourcentage de points de l'image correspondant au véhicule se trouvant à l'intérieur du modèle de véhicule projeté sur ladite image.

De façon préférée, l'étape (d) est précédée d'une étape d'extraction d'un ensemble limité d'images de l'objet, à partir des données enregistrées, les comparaisons des étapes (d) et (f) étant effectuées sur la base de cet ensemble limité.

Egalement de façon préférée, l'étape (d) est précédée d'une étape de traitement des images pour éliminer l'arrière-plan et ne conserver que les points relatifs à l'objet.

Dans un mode préféré de mise en oeuvre du procédé, au cours de l'étape (g), la trajectoire $T_{i+1}$ est affectée de la probabilité : min (1, $C_{i+1}/C_i$).

Ainsi, lorsque le rapport $C_{i+1}/C_i$ est inférieur à 1, dans une première variante, un nombre compris entre 0 et 1 est tiré au hasard, la trajectoire $T_{i+1}$ étant retenue si le rapport $C_{i+1}/C_i$ est supérieur à ce nombre.

Dans une deuxième variante, la trajectoire $T_i$ est retenue.

Dans un mode préféré de mise en oeuvre du procédé, aux étapes (e) et (h), la génération d'une trajectoire modèle est réalisée en modifiant au moins un paramètre de la trajectoire modèle précédente.

Dans une première variante, la répétition prévue à l'étape (i) peut être réalisée n-1 fois, le nombre n étant prédéterminé, notamment inférieur ou égal à 200.

Dans une deuxième variante, l'étape de répétition (i) prend fin lorsque la nouvelle trajectoire modèle générée à l'étape (h) est identique à la trajectoire modèle précédente, pendant un nombre de fois prédéterminé.

Le procédé selon l'invention comprend avantageusement une étape (k) d'affichage de la trajectoire modèle retenue.

L'invention concerne également un procédé de mesure du trafic sur un giratoire dans lequel débouchent n voies d'entrée et m voies de sortie et sur lequel circule une pluralité d'objets mobiles passifs, comprenant les étapes suivantes :

- mise en oeuvre du procédé de mesure de la trajectoire selon l'invention, pour chacun des objets circulant sur ledit giratoire, pour mesurer sa trajectoire entre une voie d'entrée et une voie de sortie dudit giratoire et
- analyse des trajectoires obtenues pour établir une matrice entrée/sortie desdits objets sur ledit giratoire.

L'invention concerne également un système de mesure de la trajectoire d'un objet mobile passif dans un site déterminé, comprenant :

- au moins un capteur d'images successives dudit objet lors de son déplacement
- une mémoire pour enregistrer les données issues dudit au moins un capteur
- des moyens de traitement desdites données selon les étapes (c) à (j) du procédé selon l'invention et
- des moyens d'affichage de la trajectoire modèle retenue.

Le capteur d'images peut consister en une caméra vidéo ou un télémètre laser.

Le système comporte, de préférence, des moyens de calibrage desdits capteurs par rapport à un repère GPS ainsi qu'une base de temps commune à tous les capteurs.

L'invention sera mieux comprise et d'autres buts, avantages et caractéristiques de celle-ci apparaîtront plus clairement à la lecture de la description qui suit et qui fera référence aux dessins annexés sur lesquels :

- la figure 1 représente un exemple de réalisation d'un système selon l'invention permettant la mesure de la trajectoire d'un objet mobile,
- la figure 2 comprend les figures 2a et 2b qui illustrent le principe de fonctionnement d'un télémètre laser,
- la figure 3 comprend les figures 3a et 3b qui illustrent une étape de traitement préalable des images vidéo,
- la figure 4 illustre un exemple d'évolution temporelle discrète de l'angle de braquage $\delta_k$ (k), en sortie de virage, avec les paramètres associés,
- la figure 5 illustre une trajectoire modèle pour un véhicule circulant dans le virage illustré à la figure 1,
- la figure 6 illustre un exemple de modèle de véhicule utilisé pour mettre en oeuvre l'étape de comparaison du procédé selon l'invention,
- la figure 7 illustre pour une image du type vidéo, un exemple de mise en oeuvre de l'étape de comparaison entre l'image et la trajectoire modèle,
- la figure 8 illustre une représentation des échos laser simulés en un point de la trajectoire modèle illustrée à la figure 5,
- la figure 9 illustre sur une image du type écho laser, les échos réels ($\oplus$) et les échos simulés (+) obtenus à partir d'une trajectoire modèle.
- la figure 10 illustre un faisceau de trajectoires mesurées par le procédé selon l'invention, pour des véhicules circulant sur la partie amont d'un virage.
- La figure 11 illustre, dans le cadre d'un essai, la précision (%) en fonction d'une tolérance sur la position (cm) pour le procédé de suivi séquentiel itératif (C1) et le procédé selon l'invention (C2)
- La figure 12 illustre, dans le cadre du même essai que celui de la figure 11, la précision (%) en fonction d'une tolérance sur le cap (en dixièmes de degré) pour le procédé de suivi séquentiel itératif (C1) et pour le procédé selon l'invention (C2),
- la figure 13 illustre un faisceau de trajectoires mesurées par le procédé selon l'invention pour des véhicules circulant sur un giratoire et
- la figure 14 illustre un faisceau de trajectoires mesurées par le procédé selon l'invention pour des véhicules circulant en amont d'un péage d'autoroute.

Les éléments communs aux différentes figures seront désignés par les mêmes références.

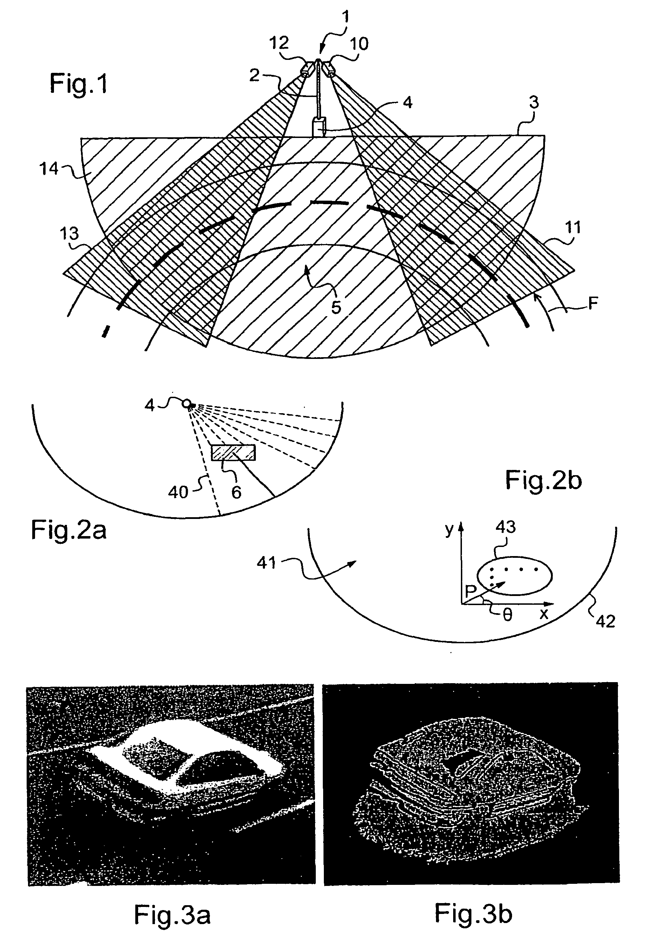

Il est tout d'abord fait référence à la figure 1 qui illustre très schématiquement le système selon l'invention, permettant la mesure de la trajectoire d'un objet mobile et notamment d'un véhicule.

Ce système comporte un ensemble de caméras 1, ici au nombre de deux. Ces caméras sont disposées sur un mât 2. Dans cet exemple, le mât est disposé à environ 5 m de haut par rapport au niveau du sol 3 et sensiblement au centre de la zone à observer.

La zone à observer est ici un virage 5 d'une route.

Le système selon l'invention permet de déterminer la trajectoire d'un véhicule se déplaçant sur la voie de droite du virage, selon la direction illustrée par la flèche F.

Le système comporte également un télémètre laser 4, positionné au pied du mât 2.

Les caméras utilisées enregistrent un flux vidéo couleur non compressé à la cadence de 30 images par seconde. Elles peuvent être au format VGA (résolution 640 x 480) et de façon préférée, à iris automatique.

La figure 1 illustre la zone d'observation 11 de la caméra 10 ou caméra « d'arrivée » et la zone d'observation 13 de la caméra 12, dite caméra « de fuite ».

Dans l'exemple illustré, la portée efficace des caméras utilisées est d'environ 50 m.

Dans cet exemple, le télémètre laser déclenche 180 tirs laser sur une amplitude de 180°. La zone couverte par le télémètre laser est ainsi schématiquement illustrée par le demi-disque 14.

Le balayage de cette zone 14 est typiquement effectué en 25 ms et ce télémètre laser permet de détecter les obstacles situés à environ 80 cm au-dessus du sol.

On comprend qu'avec cette disposition des caméras 10 et 12 et du télémètre laser 4, ce dernier permet d'obtenir des données dans la partie centrale du virage 5 ainsi que dans les champs de vision 11 et 13 des caméras.

De façon préférée, le système comporte également, en amont de la zone à observer, des moyens, par exemple des cellules laser, permettant de détecter l'arrivée du véhicule dans cette zone et de déclencher le fonctionnement des caméras et du télémètre laser.

Le système selon l'invention comporte également des moyens pour le stockage des données issues des caméras et du télémètre laser. Il s'agit d'un équipement informatique et notamment un PC d'acquisition.

Les données issues des caméras ou du télémètre laser constituent des images successives de l'objet mobile, notamment une voiture, lors de son déplacement dans la zone d'observation.

Dans l'ensemble de la description, on comprend par le terme *« image »,* un ensemble de points de mesure référencés spatialement, chaque point correspondant à une intensité lumineuse ou à une distance.

Ainsi, chaque caméra vidéo permet d'acquérir une série d'images basées sur une mesure d'intensité lumineuse. Chaque point de mesure correspond à un pixel de l'image.

Un télémètre laser permet d'acquérir des images basées sur une mesure de distance.

En effet, le télémètre laser envoie des tirs laser et enregistre les coordonnées polaires de l'écho dont est déduite la distance entre l'objet et le télémètre. La mesure de distance est généralement basée sur le temps de vol, aller et retour, d'un faisceau laser sur une cible, ici l'objet mobile.

Il est maintenant fait référence à la figure 2 qui illustre schématiquement le fonctionnement d'un télémètre.

Ainsi, le télémètre 4 envoie à intervalle de temps discret un tir laser sur une portée d'environ 80 m dans son champ de vision. Il effectue ainsi 180 tirs laser sur une amplitude de 180°, toutes les 20 ms. C'est ce qu'illustre la figure 2a.

En interceptant un obstacle, par exemple un véhicule, le tir laser renvoie un écho qui permet de connaître la distance de l'obstacle au télémètre. Le télémètre permet ainsi de fournir les coordonnées polaires ($\rho$, $\theta$) et cartésiennes (x, y) des 180 échos. L'image, dite *«écho laser»* donnée par le télémètre est illustrée à la figure 2b qui comporte une série de points.

En pratique, au maximum deux côtés du véhicule peuvent être atteints par un tir laser puisqu'il ne traverse pas les obstacles.

Ainsi, la figure 2a montre un ensemble 43 de points correspondant à un véhicule, dont deux côtés ont été atteints par des tirs laser.

On comprend que, selon la position du véhicule dans la zone à observer, les échos laser se présenteront sous la forme d'un seul segment ou de deux segments, éventuellement en position inversée par rapport aux deux segments de l'ensemble 43.

On pourrait également utiliser des caméras permettant de fournir directement des images dont chaque pixel est un écho laser.

Le système illustré à la figure 1 comporte à la fois des caméras vidéo et un télémètre laser.

On pourrait envisager de n'utiliser que des caméras vidéo ou encore qu'un télémètre laser. Bien sûr, l'utilisation d'un seul type de capteur conduit à une précision plus faible.

Par ailleurs, le nombre de caméras peut varier entre 1 et 3. Ainsi, une troisième caméra peut être disposée sur le mât de façon à ce que son champ de vision soit situé entre ceux 11 et 13 des caméras 10 et 12.

Il convient de noter qu'un télémètre laser permet de fournir des renseignements plus précis, notamment lorsque les conditions extérieures ne permettent pas l'utilisation des images vidéo. C'est notamment le cas durant la nuit. Par ailleurs, les images laser présentent l'avantage de coïncider avec le contour du véhicule puisqu'elles ne génèrent pas d'ombres, contrairement aux images vidéo.

Par contre, par temps de bruine, ce sont les données issues des caméras qui sont les seules utilisables. Les deux types de capteurs sont donc bien complémentaires.

Il est bien sûr nécessaire que tous les capteurs fournissent des données dans un référentiel commun.

Dans le cadre de l'invention, il a été choisi d'effectuer un calibrage pour que toutes les données soient générées dans un référentiel GPS.

Ce calibrage peut être réalisé en faisant passer un véhicule équipé d'un système GPS de précision centimétrique, devant les différents capteurs.

Les mesures issues des capteurs sont ensuite comparées aux mesures réalisées par le système GPS.

Par ailleurs, une synchronisation temporelle des différents capteurs est réalisée en permanence. Ils sont donc associés à une même base de temps qui est également la base de temps du GPS utilisé pour le calibrage.

Le système selon l'invention comporte également des moyens, typiquement des moyens informatiques, permettant de traiter les données issues des caméras et du télémètre laser. Ces moyens de traitement mettent en oeuvre le procédé selon l'invention, pour mesurer la trajectoire d'un objet mobile, par exemple un véhicule.

Le système selon l'invention comporte enfin des moyens d'affichage de la trajectoire mesurée grâce au procédé selon l'invention.

Ainsi, le procédé selon l'invention permettant la mesure de la trajectoire de l'objet mobile est mis en oeuvre sur la base des données enregistrées, après leur acquisition par des caméras vidéo et télémètre laser.

En pratique, les données enregistrées subissent, de façon avantageuse, une étape de traitement préalable permettant d'éliminer l'arrière-plan pour ne conserver que les points de mesure relatifs à l'objet.

Comme on le verra dans la suite de la description, cette étape de traitement permet d'augmenter la précision de la trajectoire obtenue.

En ce qui concerne les images du type vidéo, cette étape de traitement permet d'éliminer les pixels qui ne correspondent pas à une forme mobile.

Ainsi, cette étape de traitement permet d'éliminer le fond de l'image et notamment l'ombre du véhicule projetée sur le sol. A défaut, l'ombre peut être confondue avec la forme mobile du véhicule, ce qui constitue une source d'erreurs lorsque l'on cherche à mesurer sa trajectoire. D'autres sources d'erreurs peuvent également être diminuées voire supprimées. Par exemple les changements brutaux des conditions d'ensoleillement, les véhicules sombres qui peuvent être considérés comme faisant partie du fond de l'image, la présence du véhicule dont on cherche à déterminer à la trajectoire dans une file de véhicules rapprochés, la présence de deux voies de circulation pour les véhicules alors qu'on ne s'intéresse qu'aux véhicules circulant dans une seule voie.

A titre d'exemple, on peut citer une méthode permettant la suppression des ombres.

Comme indiqué ci-dessus, il faut éviter que l'ombre soit considérée comme appartenant à la forme.

Il convient donc d'identifier l'ombre afin de pouvoir l'effacer.

Dans le cadre de l'invention, cette séparation est basée sur une méthode de binarisation qui revient à séparer les pixels des images en deux classes de gris, la première ayant un niveau maximal et la seconde un niveau minimal.

Cette méthode est classiquement dénommée binarisation. Cette méthode consiste à attribuer tout d'abord un niveau de gris à chaque pixel des images. Ensuite, les valeurs obtenues sont comparées à un seuil déterminé. Tous les points ayant un niveau de gris inférieur à ce seuil sont identifiés comme appartenant à l'ombre du véhicule.

A titre d'illustration, on peut se référer à la figure 3. La figure 3a montre une image vidéo enregistrée. La figure 3b montre cette même image après traitement.

Les points paraissant en gris clair sont conservés et appartiennent à l'objet mobile. Le fond de l'image, y compris l'ombre du véhicule apparaissent en noir ou en gris foncé et sont ensuite supprimés.

La qualité du résultat du traitement dépend des images enregistrées.

Selon les cas, des points identifiés comme appartenant à l'objet mobile peuvent, en pratique, appartenir à l'ombre du véhicule.

On peut citer d'autres procédés connus permettant d'extraire le fond des images, comme par exemple celui décrit dans l'article de C. Stauffer et W. Eric L. Grimson « Learning patterns of activity using real-time tracking » (paru dans IEEE Transactions on Pattern Analysis and Machine Intelligence 22 (8).- Août 2000). Ce procédé est appelé procédé de soustraction de fond par mixture de gaussiènes.

Une autre méthode de binarisation, dite méthode Vue-Mètre, est décrite dans l'article de Goyat Y., Chateau Th., Malaterre L. and Trassoudaine L. (2006), « Vehicle Trajectories Evaluation by Static Video Sensors », paru dans ITSC06 2006 - 9th International IEEE Conference on Intelligent Transportation Systems.

En ce qui concerne les images du type « *écho laser* », cette étape de traitement permet d'éliminer les échos qui ne correspondent pas à une forme mobile.

Ainsi, la figure 2b montre que tous les échos enregistrés n'appartiennent pas nécessairement à un objet mobile.

Ainsi, le point 41 correspond à un obstacle imprévu, par exemple un pylône ou un arbre. De même, les points situés sur l'arc de cercle 42 correspondent à des tirs n'ayant atteint aucun obstacle sur leur trajet. En effet, dans ce cas, le télémètre enregistre un écho correspondant à sa portée maximale.

Ce traitement consiste donc tout d'abord à distinguer, pour chaque image, les échos appartenant au véhicule des échos appartenant à l'environnement ou encore au fond.

Cette étape peut être mise en oeuvre en réalisant au préalable une image laser du fond puis en la comparant à chaque image de façon à soustraire de chacune de ces images les échos identifiés comme appartenant au fond.

D'autres étapes de traitement des images de type « *écho laser* » peuvent être prévues pour éliminer les bruits, c'est-à-dire les échos parasites.

Dans l'exemple illustré à la figure 2b, ce traitement préalable consiste donc à éliminer les points situés sur l'arc de cercle 42 et le point 41.

Différentes étapes du procédé selon l'invention vont maintenant être décrites.

Ce procédé est basé sur l'utilisation de trajectoires modèles.

On entend ici par « *trajectoire modèle* » une trajectoire modélisée par des paramètres. Ces paramètres peuvent être des grandeurs physiques ou un ensemble de points de la trajectoire à partir duquel la trajectoire complète peut être obtenue par interpolation.

On rappelle que les commandes d'un conducteur sur son véhicule sont l'angle de braquage des roues et la vitesse longitudinale ou encore l'accélération du véhicule.

Ainsi, lorsque la trajectoire modèle est paramétrée à partir de grandeurs physiques, celle-ci consiste en la

position initiale $(x_0, y_0)$ du véhicule et son orientation initiale $(\beta_0)$, l'évolution de l'accélération ou de la vitesse $(\nu_k)$ et l'évolution de l'angle de braquage $(\delta_k)$ en fonction du temps.

En pratique, les paramètres à considérer sont au nombre de 11, pour tout type de trajectoire.

Nous prendrons tout d'abord comme exemple une trajectoire modèle adaptée à un virage et basée sur des grandeurs physiques.

L'expérience montre que, sur un virage, l'angle de braquage et la vitesse d'un véhicule léger peuvent être modélisés par des sigmoïdes. En pratique, le virage peut être décomposé en trois phases (entrée, centre et sortie du virage), étant entendu qu'une sigmoïde particulière est associée à chaque phase, tant pour l'angle de braquage que la vitesse du véhicule.

L'exemple qui suit est centré sur la modélisation de la sortie du virage. Ainsi, en sortie de virage, la trajectoire du véhicule est représentée par vecteur d'état aléatoire $X = (x_0, y_0, \beta_0, \theta_\delta, \theta_\nu)^T$ avec :

- $(x_0, y_0, \beta_0)$ représentant la position initiale et l'orientation du véhicule.
- $\theta_\delta = (\theta_{\delta,1},..., \theta_{\delta,4})$ sont les paramètres de la fonction sigmoïde $\delta_k = f_\delta(\theta_{\delta,k})$ représentant l'évolution temporelle discrète de l'angle de braquage.
- $\theta_\nu = (\theta_{\nu,1},..,\theta_{\nu,4})$ sont les paramètres de la fonction sigmoïde $\nu_k = f_\nu(\theta_{\nu,k})$ représentant l'évolution temporelle discrète de la vitesse du véhicule.

L'évolution temporelle discrète de l'angle de braquage est donnée par la formule suivante :

$$f\delta(\theta_\delta, t) = \frac{\theta_{\delta,2}}{1 + exp\left[\dfrac{\theta_{\delta,3}(\theta_{\delta,4} - t)}{|\theta_{\delta,2}|}\right]} + \theta_{\delta,1} \qquad (1)$$

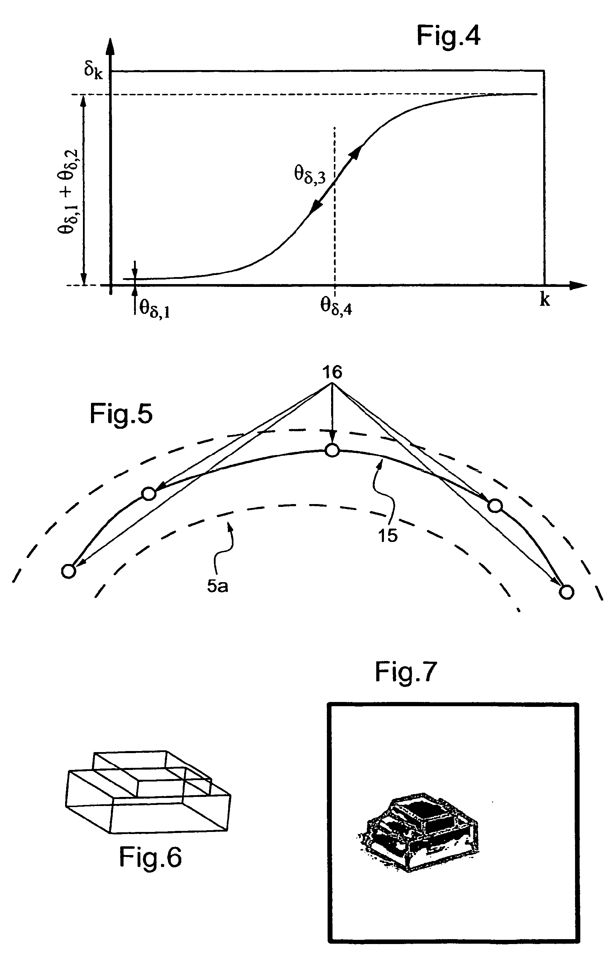

dans laquelle les coefficients $\theta_{\delta,1}$, $\theta_{\delta,2}$ $\theta_{\delta,3}$ et $\theta_{\delta,4}$ sont illustrés sur la figure 4 et sont définis par :

- $\theta_{\delta,1}$ : valeur minimum de l'angle de braquage
- $\theta_{\delta,2}$ : valeur maximum de l'angle de braquage
- $\theta_{\delta,3}$ : variation maximale de l'angle de braquage et
- $\theta_{\delta,4}$ : moment où la variation de l'angle de braquage est maximale (correspondant à $\theta_{\delta,3}$).

Une évolution temporelle de la vitesse du véhicule est obtenue à partir de la formule (1) en substituant l'index $\delta$ par l'index $\nu$.

En variante, une trajectoire peut être modélisée à partir d'un ensemble de points, que l'on dénommera dans la suite de la description *« points de contrôle »*.

Ces points sont bien sûr choisis en fonction de la zone à observer.

En pratique, ces points de contrôle consistent en des points de passage obligé du véhicule sur la voie, en fonction des contraintes du site.

La trajectoire modèle est ensuite classiquement obtenue par interpolation.

Dans le cas d'un virage 5a du type de celui illustré à la figure 1, un exemple de trajectoire modèle 15 avec ses différents points de contrôle 16 est illustré à la figure 5. De façon générale, on considère qu'une trajectoire modèle correspondant à un virage peut être obtenue à partir de quatre points de contrôle. En effet, on part de l'hypothèse que l'objet mobile observé a une trajectoire lissée. Bien entendu, le nombre de points de contrôle est choisi en fonction du site à observer.

A chaque point de contrôle sont associés deux paramètres correspondant aux coordonnées cartésiennes de chaque point dans le repère GPS.

Le procédé selon l'invention nécessite tout d'abord la fixation d'une trajectoire modèle initiale.

Cette trajectoire modèle initiale peut être générique, c'est-à-dire indépendante du site dans lequel le procédé est mis en oeuvre.

De façon préférée, cette trajectoire modèle initiale est déterminée en fonction des caractéristiques du site. Ce choix permet, en général, de déterminer plus rapidement la trajectoire du véhicule observé.

Dans la première variante mentionnée ci-dessus, la trajectoire modèle initiale est déterminée en choisissant une valeur initiale pour chacun des paramètres $\theta_\delta = (\theta_{\delta,1}, \theta_{\delta,2}, \theta_{\delta,3}, \theta_{\delta,4})$ et $\theta_\nu = (\theta_{\nu,1}, \theta_{\nu,2}, \theta_{\nu,3}, \theta_{\nu,4})$.

Dans la deuxième variante, les points de contrôle sont fixés dans une position initiale, dans le repère GPS.

Une fois une trajectoire modèle initiale fixée, le procédé selon l'invention consiste à procéder à des comparaisons entre cette trajectoire modèle initiale et chaque image enregistrée, pour déterminer l'indice de vraisemblance $C_0$ de cette trajectoire modèle initiale.

En variante, les comparaisons sont effectuées sur la base d'un ensemble limité d'images de l'objet, extrait des données enregistrées.

Pour des images de type vidéo par exemple, on procède à une segmentation de la vidéo enregistrée pour en extraire des séquences d'intérêt, c'est-à-dire des séquences dans lesquelles un véhicule circule effectivement sur le site observé.

Dans la suite de la description du procédé, on se basera sur une trajectoire modèle initiale du type illustré à la figure 5, c'est-à-dire basée sur un ensemble de points de contrôle.

Cette étape de comparaison utilise un modèle géométrique tridimensionnel simplifié du véhicule à suivre.

Un exemple de ce modèle est illustré à la figure 6.

Il s'agit d'un modèle constitué d'au moins un parallélépipède ici deux, qui est utilisé pour toutes les données enregistrées.

Il peut également être redimensionné pour chaque véhicule suivi grâce à des mesures réalisées avec le télémètre laser, lors de l'enregistrement des images.

Ainsi, pour chaque image i du type vidéo, la comparaison entre la trajectoire modèle initiale et cette image est réalisée tout d'abord en l'associant au point correspondant de la trajectoire modèle initiale, en fonction du temps, puis en matérialisant ce point par un modèle de véhicule et en projetant celui-ci sur l'image.

La figure 7 illustre un exemple d'image du type vidéo sur laquelle a été projeté un modèle de véhicule.

On détermine ensuite le pourcentage de pixels de l'image identifiés comme appartenant à l'objet mobile se trouvant à l'intérieur du modèle du véhicule projeté.

A partir de ce pourcentage est calculé un indice de vraisemblance $\mathbf{C_0^i}$ de la trajectoire initiale $T_0$ pour cette image i.

Ce calcul d'indice de vraisemblance est effectué pour chaque image i. L'indice de vraisemblance $C_0$ de la trajectoire initiale complète est obtenu en additionnant tous les indices de vraisemblance $\mathbf{C_0^i}$ associés à chacune des images i.

Lorsque la comparaison est effectuée avec des images du type écho laser, il convient tout d'abord d'établir une image du même type, correspondant à la trajectoire initiale $T_0$.

Ce traitement consiste à simuler les échos laser obtenus pour un véhicule modèle se déplaçant sur la trajectoire modèle initiale.

Ainsi, chaque point de la trajectoire modèle initiale est matérialisé par un modèle du véhicule du type illustré à la figure 6.

On simule alors un balayage de la zone concernée par un tir laser, on enregistre des coordonnées polaires de l'écho et on en déduit la distance entre l'objet et le point dont sont issus les tirs laser simulés.

Cette simulation permet d'obtenir une image du type « écho laser » de la trajectoire initiale.

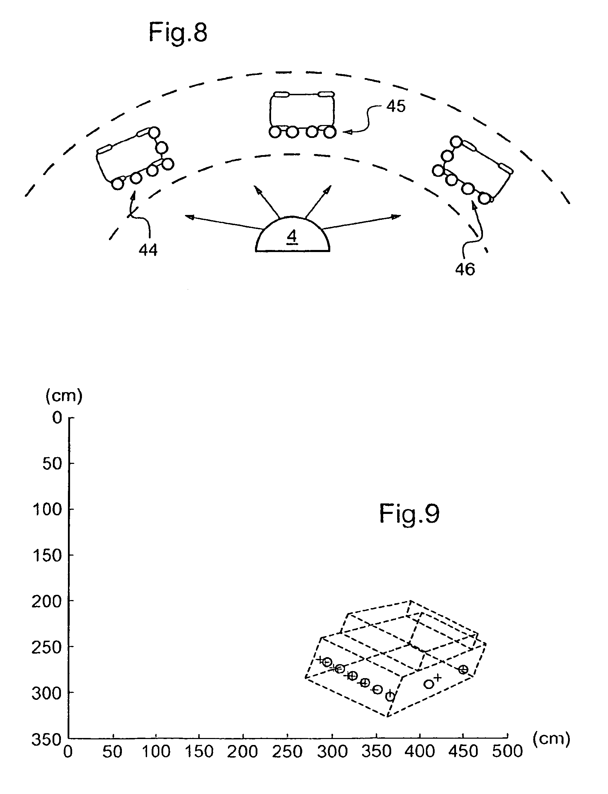

La figure 8 illustre une représentation des échos laser 44, 45 et 46 simulés en trois points de la trajectoire modèle illustrée à la figure 5.

Une fois la trajectoire modèle initiale transformée en représentation du type « écho laser », la comparaison entre la trajectoire modèle initiale et chaque image est réalisée en associant chaque image du type « écho laser » réelle à l'image modélisée correspondante, en fonction du temps. L'image modélisée est ensuite projetée sur l'image réelle.

La figure 9 illustre à un instant déterminé les échos réels (⊕) et les échos simulés (+) sur le modèle 3D du véhicule dont la position est repérée en abscisses et ordonnées (cm). Là encore, l'indice de vraisemblance est calculée image par image.

Pour chaque image i, l'indice de vraisemblance $\mathbf{C_0^i}$, est calculé en mesurant les distances entre les points de l'image « écho laser » simulée et l'image laser réelle.

En pratique, pour chaque point de l'image « écho laser » réelle, on recherche le point de l'image « écho laser » simulée qui est le plus proche et on mémorise la distance correspondant à chaque couple « image réelle-image simulée ». Parmi tous les couples, on retient la distance la plus importante. Cette valeur est l'indice de vraisemblance $C_i$ associé à l'image simulée (i).

Comme pour des images vidéo, l'indice de vraisemblance $C_0$ de la trajectoire modèle initiale complète est obtenu en additionnant tous les indices de vraisemblance $\mathbf{C_0^i}$ associés à chacune des images i du type « écho laser ».

Ce calcul de l'indice de vraisemblance $C_0$ de la trajectoire modèle initiale est effectué pour les données issues de chacun des capteurs, caméras vidéo et/ou télémètre laser.

Ainsi, lorsque plusieurs capteurs sont utilisés, l'indice de vraisemblance retenu pour la trajectoire modèle initiale correspond à la somme des indices de vraisemblance obtenus pour chacun des capteurs.

Une fois connu l'indice de vraisemblance $C_0$ de la trajectoire initiale $T_0$, l'étape suivante du procédé consiste à générer une première trajectoire modèle $T_1$ à partir de la trajectoire modèle initiale.

Dans le cas où les trajectoires modèles sont basées sur un ensemble de points de contrôle, la génération de cette première trajectoire modèle $T_1$ est effectuée en modifiant la position d'un des points de contrôle. Ce point de contrôle peut être choisi au hasard.

Dans le cas où la trajectoire modèle est basée sur des paramètres du type grandeurs physiques, la première trajectoire modèle est obtenue en modifiant un des paramètres retenus. Ainsi, dans l'exemple mentionné plus haut, relatif à une trajectoire modèle en sortie d'un virage, la première trajectoire modèle $T_1$ peut être obtenue en modifiant un des paramètres de la fonction sigmoïde représentant l'évolution temporelle discrète de la vitesse du véhicule.

Le procédé consiste ensuite à comparer cette première trajectoire modèle $T_1$ et chaque image des données enregistrées, pour déterminer l'indice de vraisemblance $C_1$ de cette première trajectoire modèle.

La comparaison s'effectue selon les mêmes principes que ceux qui ont été décrits pour la trajectoire modèle initiale.

L'étape suivante du procédé consiste à effectuer un choix entre les trajectoires $T_0$ et $T_1$, ce choix étant basé sur le rapport des indices de vraisemblance $C_1/C_0$.

De façon générale, la première trajectoire modèle est affectée de la probabilité suivante : min $(1, C_1/C_0)$.

Ainsi, lorsque le rapport $C_1/C_0$ est supérieur à 1, la trajectoire $T_1$ est retenue.

Lorsque le rapport $C_1/C_0$ est inférieur à 1, deux variantes peuvent être envisagées.

La première variante consiste à retenir la trajectoire $T_0$.

Cette première variante est basée sur un principe d'optimisation.

Une autre variante consiste à effectuer le tirage d'un nombre entre 0 et 1 et à comparer le rapport $C_1/C_0$ au nombre qui a été tiré au hasard.

La trajectoire $T_1$ est alors retenue si le rapport $C_1/C_0$ est supérieur au nombre tiré.

Cette deuxième variante est basée sur un principe d'exploration.

Dans le cadre de l'invention c'est cette deuxième variante qui a été considérée comme la plus prometteuse.

L'étape suivante du procédé consiste à générer une nouvelle trajectoire modèle, ici la deuxième, sur la base de la trajectoire retenue.

A titre d'exemple, on considère que c'est la première trajectoire modèle $T_1$ qui a été retenue.

Comme expliqué précédemment, cette deuxième trajectoire $T_2$ est obtenue à partir de la première trajectoire modèle $T_1$, en modifiant un des paramètres de $T_1$.

Comme précédemment, on effectue une comparaison entre la deuxième trajectoire modèle $T_2$ et chaque image des données enregistrées, pour déterminer un indice de vraisemblance $C_2$ de la trajectoire $T_2$, puis un choix est effectué entre les trajectoires $T_1$ et $T_2$ en fonction du rapport $C_2/C_1$.

Le procédé selon l'invention consiste ainsi à répéter les étapes de comparaison, de choix et de génération d'une nouvelle trajectoire modèle, de façon à générer n trajectoires modèles $T_i$, i = 2 à n, chacune d'elles étant affectée d'un indice de vraisemblance $C_i$, i variant de 2 à n et n étant un nombre entier supérieur à 2.

Comme expliqué précédemment, le choix entre deux trajectoires modèles $T_i$ et $T_{i+1}$ s'effectue en fonction de leur indice de vraisemblance $C_{i+1}$ et $C_i$.

Ainsi, la trajectoire $T_{i+1}$ est affectée de la probabilité : min $(1, C_{i+1}/C_i)$.

C'est donc la trajectoire $T_{i+1}$ qui est retenue lorsque le rapport $C_{i+1}/C_i$ est supérieur à 1.

Dans le cas contraire, dans une approche d'optimisation, c'est la trajectoire $T_i$ qui est retenue. Dans une approche d'exploration, le choix entre $T_i$ et $T_{i+1}$ est effectué sur la base d'un nombre compris entre 0 et 1, tiré au hasard, la trajectoire $T_{i+1}$ étant retenue si le rapport $C_{i+1}/C_i$ est supérieur à ce nombre.

Bien entendu, une limite est fixée à cette itération.

Lorsque le procédé est basé sur une optimisation, on choisit d'arrêter les itérations lorsque la nouvelle trajectoire modèle générée au cours du procédé est identique à la trajectoire modèle précédente, pendant un nombre de fois déterminé, par exemple 10. Lorsque le procédé est basé sur une exploration, la répétition des différentes étapes mentionnées plus haut est réalisée n-1 fois, le nombre n étant prédéterminé, notamment inférieur ou égal à 200.

Ainsi, le procédé selon l'invention permet de déterminer une trajectoire représentative de la trajectoire réelle du véhicule, telle qu'elle a été enregistrée par les différents capteurs.

La trajectoire obtenue est affichée sur des moyens appropriés.

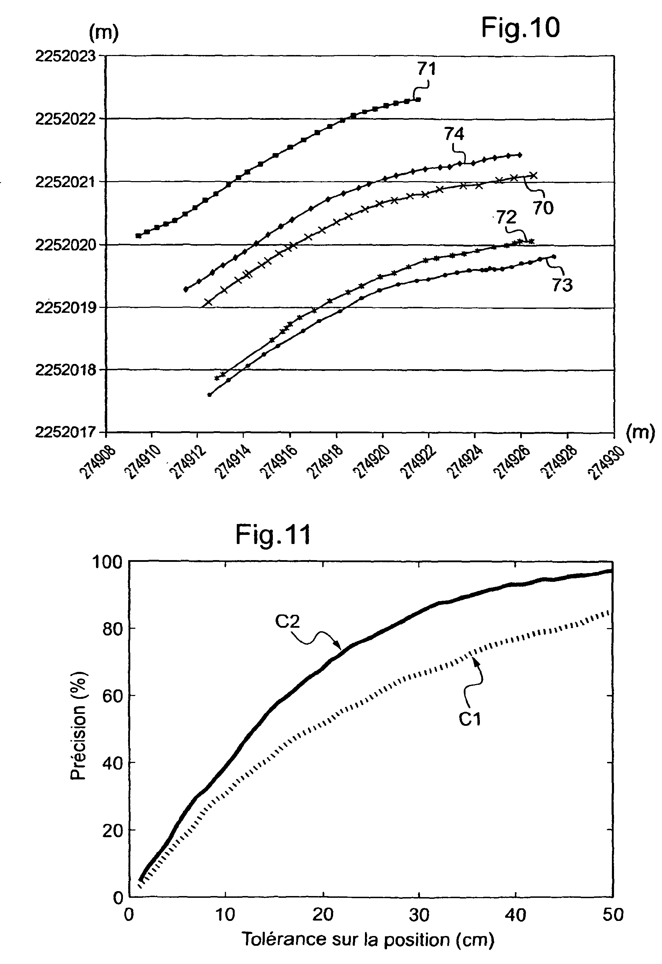

A titre d'exemple, la figure 10 illustre un faisceau de trajectoires mesurées grâce au système et au procédé selon l'invention, sur la partie amont d'un virage.

La trajectoire 70 correspond à un véhicule longeant la ligne médiane de la chaussée.

La trajectoire 71 correspond à un véhicule circulant très à droite dans sa voie de circulation. Les trajectoires 72 et 73 correspondent à des véhicules qui circulent très à gauche, en dehors de leur voie de circulation.

La trajectoire 74 est une trajectoire considérée comme correcte. En pratique, sur un nombre important de véhicules circulant dans la zone observée, une grande majorité de trajectoires sont détectées à proximité de la ligne médiane. Seules quelques trajectoires sont représentées à la figure 10 pour des raisons de clarté.

Sur la base de 100 trajectoires de véhicules mesurées, on peut établir les pourcentages suivants, regroupés dans le tableau ci-dessous :

| Position du bord du véhicule par rapport au marquage central | Taux de véhicules légers |
|---|---|
| Bien à droite | 21% |
| Longeant | 61% |
| Coupant | 16% |
| Très à gauche | 2% |

Il ressort de ce tableau que seul environ 1/5ème des usagers prend convenablement ce virage.

Sur la base de cette analyse, il a été indiqué au gestionnaire routier que le marquage central continu n'était pas suffisamment respecté et il a été proposé de le renforcer par exemple par un signal sonore.

Par ailleurs, des comparaisons ont été effectuées entre le procédé selon l'invention et le procédé dit de suivi séquentiel itératif.

Cette comparaison est réalisée pour les deux paramètres cinématiques importants pour la compréhension du comportement d'un conducteur : la position sur la chaussée et l'angle de braquage du véhicule.

Les résultats ci-dessous sont donnés pour un véhicule circulant sur un virage de rayon de courbure de 130 m minimum, et sur une distance d'environ 100 m. La trajectoire mesurée par le procédé de suivi séquentiel itératif et celle mesurée par le procédé selon l'invention sont chacune comparées à la trajectoire mesurée grâce à un GPS, précis au centimètre près, qui équipe le véhicule.

Ces résultats correspondent à 20 passages de ce véhicule selon des trajectoires différentes et à des vitesses comprises entre 40 et 80 km/h.

Le tableau ci-dessous présente l'erreur moyenne et l'écart-type correspondant pour les deux grandeurs mesurées, position et cap, et pour chacun des deux procédés, procédé de suivi séquentiel itératif et procédé selon l'invention.

Il convient de noter que l'angle au volant peut être déduit du cap.

| | POSITION (cm) | | CAP (degré) | |
|---|---|---|---|---|
| PROCEDE | ERREUR MOYENNE | ECART-TYPE | ERREUR MOYENNE | ECART-TYPE |
| Procédé de suivi séquentiel itératif | 0, 27 | 0, 26 | 3, 67 | 3, 36 |
| Procédé selon l'invention | 0, 20 | 0, 22 | 1, 12 | 0, 97 |

Ce tableau montre que le procédé selon l'invention permet de mesurer les trajectoires d'un véhicule avec une précision plus importante, grâce à une précision beaucoup plus élevée pour la mesure du cap.

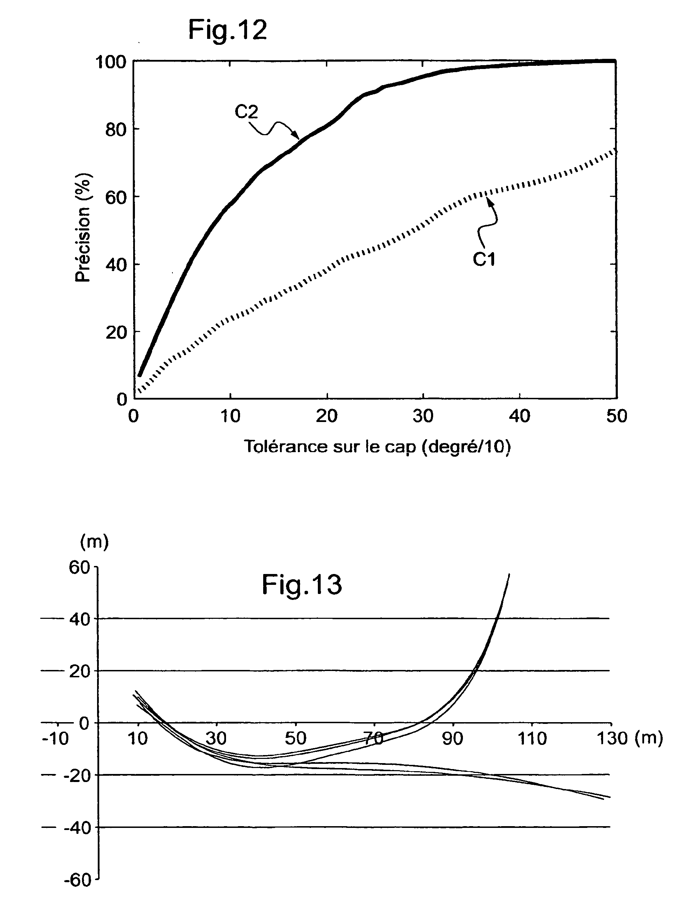

Ceci est confirmé par les figures 11 et 12.

Sur la figure 11, la tolérance sur la position (en abscisses) ou erreur absolue de position, est comprise entre 0 et 50 cm, tandis que sur la figure 12, la tolérance sur le cap (en abscisses) ou erreur absolue de cap, est comprise entre 0 et 5 degrés.

Pour les deux figures, on entend par « précision » le pourcentage de positions ou de caps corrects.

La figure 11 et surtout la figure 12, montrent que le procédé selon l'invention apporte une plus grande précision dans la mesure d'une trajectoire de véhicule.

La figure 13 illustre un faisceau de trajectoires mesurées avec le système et le procédé selon l'invention, sur un giratoire, repérées en abscisses et ordonnées (en m).

Dans cette application, le système et le procédé selon l'invention permettent de former des matrices d'entrée-sortie des véhicules pour connaître comment se déroule le trafic dans le giratoire.

Cette analyse peut déboucher sur une adaptation de la signalisation, par exemple en mettant en activité des feux tricolores à certaines heures de la journée et sur certaines voies de circulation.

Son application principale est de permettre de tester des modifications d'un giratoire en utilisant les données acquises avec des modèles virtuels connus.

Ces tests permettent de déterminer les modifications les plus efficaces pour réguler le trafic et donc de ne procéder à des travaux importants qu'à bon escient.

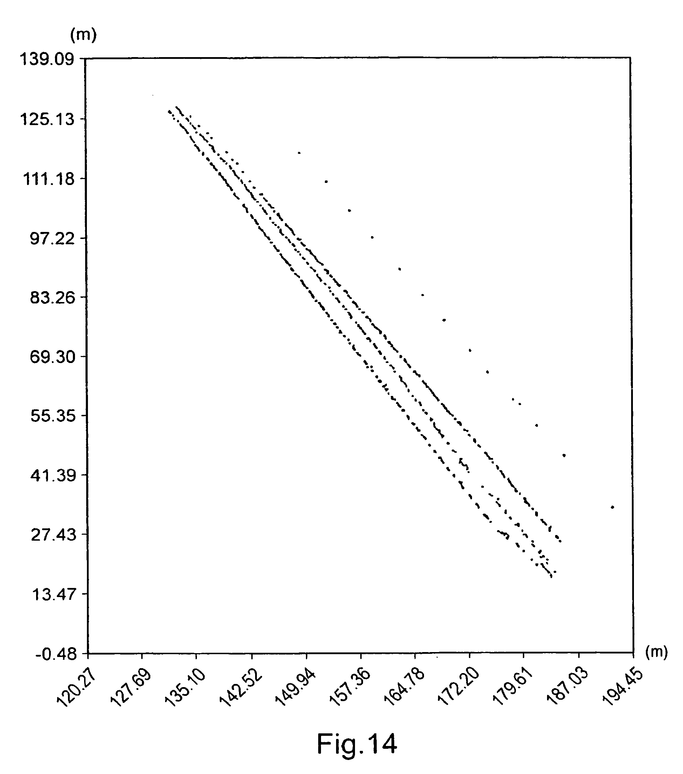

La figure 14 illustre un faisceau de trajectoires mesurées avec le système et le procédé selon l'invention, en amont d'un péage d'autoroute, repérées en abscisses et ordonnées (en m).

Cette analyse permet de mieux comprendre le comportement des conducteurs dans une zone où se produisent de nombreux accidents à cause des changements de voie tardifs.

Une des applications serait de tester des marquages au sol pour guider les conducteurs et éviter les changements de voie.

La description qui précède a été essentiellement réalisée pour la mesure d'un véhicule circulant sur une chaussée. Cependant, le procédé selon l'invention peut bien sûr être appliqué à la mesure de trajectoire de tout objet mobile passif.

**Revendications**

1. Procédé de mesure de la trajectoire d'un objet mobile passif dans un site déterminé, comprenant les étapes suivantes :

   (a) l'acquisition de données relatives au déplacement dudit objet dans ledit site, ces données incluant au moins des images successives dudit objet lors de son déplacement
   (b) l'enregistrement desdites données
   (c) la fixation d'une trajectoire modèle initiale
   (d) la comparaison entre la trajectoire modèle initiale et chaque image, pour déterminer un indice de vraisemblance ($C_0$) de la trajectoire initiale ($T_0$)
   (e) la génération d'une première trajectoire modèle ($T_1$) à partir de la trajectoire modèle initiale ($T_0$)
   (f) la comparaison entre la première trajectoire modèle ($T_1$) et chaque image des données enregistrées pour déterminer un indice de vraisemblance ($Ci$) de la première trajectoire modèle
   (g) le choix entre les trajectoires $T_0$ et $T_1$, en fonction du rapport $C_1/C_0$
   (h) la génération d'une nouvelle trajectoire modèle, sur la base de la trajectoire retenue
   (i) la répétition des étapes (f), (g) et (h), de façon à générer n trajectoires modèles ($T_{i, i=2 à n}$), avec un indice de vraisemblance ($C_{i, i=2 à n}$), n étant un nombre entier supérieur à 2
   (j) le choix entre les n trajectoires modèles, en fonction de leur indice de vraisemblance.

2. Procédé selon la revendication 1, dans lequel, à l'étape (a), les données sont détectées dans un repère GPS.

3. Procédé selon la revendication 1 ou 2, dans lequel, à l'étape (c), la trajectoire modèle initiale est indépendante du site dans lequel le procédé est mis en oeuvre.

4. Procédé selon l'une des revendications 1 ou 2, dans lequel, à l'étape (c), la trajectoire modèle initiale est déterminée en fonction des caractéristiques du site.

5. Procédé selon l'une des revendications 1 à 4, dans lequel, aux étapes (d) et (f), la comparaison entre une trajectoire modèle et les images enregistrées s'effectue image par image, en associant chacune d'elles au point correspondant de la trajectoire modèle, en fonction du temps.

6. Procédé selon la revendication 5, dans lequel chaque point de la trajectoire modèle est représenté par un modèle de véhicule, la comparaison consistant à déterminer le pourcentage de points de l'image correspondant au véhicule se trouvant à l'intérieur du modèle de véhicule projeté sur ladite image.

7. Procédé selon l'une des revendications 1 à 6, dans lequel l'étape (d) est précédée d'une étape d'extraction d'un ensemble limité d'images de l'objet, à partir des données enregistrées, les comparaisons des étapes (d) et (f) étant effectuées sur la base de cet ensemble limité.

8. Procédé selon l'une des revendications 1 à 7, dans lequel l'étape (d) est précédée d'une étape de traitement des images pour éliminer l'arrière-plan et ne conserver que les points relatifs à l'objet.

9. Procédé selon l'une des revendications 1 à 8 dans lequel, au cours de l'étape (g), la trajectoire $T_{i+1}$ est affectée de la probabilité : min $(1, C_{i+1}/C_i)$.

**10.** Procédé selon la revendication 9 dans lequel, lorsque le rapport $C_{i+1} / C_i$ est inférieur à 1, un nombre compris entre 0 et 1 est tiré au hasard, la trajectoire $T_{i+1}$ étant retenue si le rapport $C_{i+1} / C_i$ est supérieur à ce nombre.

**11.** Procédé selon la revendication 9 dans lequel, lorsque le rapport $C_{i+1} / C_i$ est inférieur à 1, la trajectoire $T_i$ est retenue.

**12.** Procédé selon l'une des revendications 1 à 11 dans lequel, aux étapes (e) et (h), la génération d'une trajectoire modèle est réalisée en modifiant au moins un paramètre de la trajectoire modèle précédente.

**13.** Procédé selon l'une des revendications 1 à 10, dans lequel la répétition prévue à l'étape (i), est réalisée n-1 fois, le nombre n étant prédéterminé, notamment inférieur ou égal à 200.

**14.** Procédé selon l'une des revendications 1 à 9 et 11, dans lequel l'étape de répétition (i) prend fin lorsque la nouvelle trajectoire modèle générée à l'étape (h) est identique à la trajectoire modèle précédente, pendant un nombre de fois prédéterminé.

**15.** Procédé selon l'une des revendications 1 à 14, comprenant une étape (k) d'affichage de la trajectoire modèle retenue.

**16.** Système de mesure de la trajectoire d'un objet mobile passif dans un site déterminé, comprenant :

    - au moins un capteur d'images successives dudit objet lors de son déplacement
    - une mémoire adaptée à enregistrer les données issues dudit au moins un capteur
    - des moyens de traitement desdites données **caractérisé en ce que** lesdits moyens de traitement desdites données sont adaptés à traiter lesdites données selon les étapes (c) à (j) du procédé selon l'une des revendications 1 à 15 et
    - des moyens d'affichage de la trajectoire modèle retenue.

**17.** Système selon la revendication 16, comportant des moyens de calibrage desdits capteurs par rapport à un repère GPS et/ou une base de temps commune à tous les capteurs.

**Claims**

**1.** Method of measuring the trajectory of a passive object moving at a given site, comprising the following steps:

    (a) acquiring data relating to the displacement of said object at said site, this data including at least successive images of said object during its displacement,
    (b) recording said data,
    (c) fixing an initial model trajectory,
    (d) running a comparison between the initial model trajectory and each image in order to determine a likelihood index ($C_0$) of the initial trajectory (To),
    (e) generating a first model trajectory ($T_1$) from the initial model trajectory ($T_0$),
    (f) running a comparison between the first model trajectory ($T_1$) and each image of the recorded data in order to determine a likelihood index ($C_1$) of the first model trajectory,
    (g) choosing between trajectories $T_0$ and $T_1$ as a function of the ratio $C_1/C_0$,
    (h) generating a new model trajectory on the basis of the selected trajectory,
    (i) repeating steps (f), (g) and (h) in order to generate n model trajectories ($T_{i,i = 2\,to\,n}$) with a likelihood index ($C_{i,\ i = 2\,to\,n}$), n being an integer greater than 2,
    (j) choosing between the n model trajectories as a function of their likelihood index.

**2.** Method as claimed in claim 1, in which data is detected within a GPS frame of reference at step (a).

**3.** Method as claimed in claim 1 or 2, in which the initial model trajectory at step (c) is independent of the site at which the method is implemented.

**4.** Method as claimed in one of claims 1 or 2, in which the initial model trajectory is determined as a function of characteristics of the site at step (c).

**5.** Method as claimed in one of claims 1 to 4, in which, at steps (d) and (f), the comparison between a model trajectory and the recorded images is run image by image, each of them being associated with the corresponding point of the model trajectory as a function of time.

6. Method as claimed in claim 5, in which each point of the model trajectory is represented by a vehicle model, and the comparison involves determining the percentage of points of the image corresponding to the vehicle located inside the vehicle model projected onto said image.

7. Method as claimed in one of claims 1 to 6, in which step (d) is preceded by a step of extracting a limited set of images of the object from the recorded data, the comparisons run in steps (d) and (f) being run on the basis of this limited set.

8. Method as claimed in one of claims 1 to 7, in which step (d) is preceded by a step of or processing the images in order to eliminate the background and retain only the points relating to the object.

9. Method as claimed in one of claims 1 to 8, in which, at step (g), the trajectory $T_{i+1}$ is assigned the probability : min $(1, C_{i+1}/C_i)$.

10. Method as claimed in claim 9, in which, if the ratio $C_{i+1}/C_i$ is less than 1, a number between 0 and 1 is drawn at random, whereas the trajectory $T_{i+1}$ is selected if the ratio $C_{i+1}/C_i$ is greater than this number.

11. Method as claimed in claim 9, in which, if the ratio $C_{i+1}/C_i$ is less than 1, the trajectory $T_i$ is chosen.

12. Method as claimed in one of claims 1 to 11, in which, at steps (e) and (h), a model trajectory is generated by modifying at least one parameter of the preceding model trajectory.

13. Method as claimed in one of claims 1 to 10, in which the repetition run at step (i) is run n-1 times, n being a predetermined number, in particular less than or equal to 200.

14. Method as claimed in one of claims 1 to 9 and 11, in which repetition step (i) terminates when the new model trajectory generated at step (h) is identical to the preceding model trajectory for a predetermined number of times.

15. Method as claimed in one of claims 1 to 14, comprising a step (k) of displaying the model trajectory selected.

16. System of measuring the trajectory of a passive object moving at a given site, comprising:

    - at least one sensor capturing successive images of said object during its displacement,
    - a memory adapted to record the data transmitted by said at least one sensor,
    - means for processing said data, **characterised in that** said means for processing said data are adapted to process said data in accordance with steps (c) to (j) of the method as claimed in one of claims 1 to 15, and
    - means for displaying the selected model trajectory.

17. System as claimed in claim 16, having means for calibrating said sensors relative to a GPS frame of reference and/or a time base common to all the sensors.

**Patentansprüche**

1. Verfahren zum Messen der Trajektorie eines passiven, beweglichen Objektes an einem bestimmten Ort, das die folgenden Schritte aufweist:

    (a) Erlangen von Daten in Bezug auf die Verschiebung des Objektes an dem Ort, wobei die Daten zumindest aufeinanderfolgende Bilder des Objektes bei seiner Verschiebung aufweisen,
    (b) Aufzeichnen der Daten,
    (c) die Fixierung einer Anfangsmodelltrajektorie,
    (d) der Vergleich zwischen der Anfangsmodelltrajektorie und jedem Bild, um einen Wahrscheinlichkeitsindex $(C_0)$ der Anfangstrajektorie $(T_0)$ zu bestimmen,
    (e) die Erzeugung einer ersten Modelltrajektorie $(T_1)$ ausgehend von der Anfangsmodelltrajektorie $(T_0)$,
    (f) der Vergleich zwischen der ersten Modelltrajektorie $(T_1)$ und jedem Bild der aufgezeichneten Daten, um

einen Wahrscheinlichkeitsindex ($C_1$) der ersten Modelltrajektorie zu bestimmen,

(g) die Wahl zwischen den Trajektorien $T_0$ und $T_1$ in Abhängigkeit von dem Verhältnis $C_1/C_0$,

(h) die Erzeugung einer neuen Modelltrajektorie auf der Grundlage der beibehaltenen Trajektorie,

(i) die Wiederholung der Schritte (f), (g) und (h) in der Weise, dass n Modelltrajektorien ($T_{i,\,i=2\ bis\ n}$) mit einem Wahrscheinlichkeitsindex ($C_{i,\,i=2\ bis\ n}$) erzeugt werden, wobei n ganzzahlig und größer als 2 ist,

(j) die Wahl zwischen n Modelltrajektorien in Abhängigkeit vom Wahrscheinlichkeitsindex von diesen.

2. Verfahren nach Anspruch 1, wobei in Schritt (a) die Daten in einem GPS-Bezugssystem erfasst werden.

3. Verfahren nach Anspruch 1 oder 2, wobei in Schritt (c) die Anfangsmodelltrajektorie unabhängig von dem Ort, an dem das Verfahren umgesetzt wird, ist.

4. Verfahren nach Anspruch 1 oder 2, wobei in Schritt (c) die Anfangsmodelltrajektorie in Abhängigkeit von den Kenngrößen des Ortes bestimmt wird.

5. Verfahren nach einem der Ansprüche 1 bis 4, wobei in den Schritte (d) und (f) der Vergleich zwischen der Modelltrajektorie und den aufgezeichneten Bildern bildweise erfolgt, indem jedes von diesen mit dem entsprechenden Punkt der Modelltrajektorie in Abhängigkeit von der Zeit verbunden wird.

6. Verfahren nach Anspruch 5, wobei jeder Punkt der Modelltrajektorie durch ein Fahrzeugmodell repräsentiert wird, wobei der Vergleich darin besteht, die Prozentzahl der Punkte des Bildes entsprechend dem Fahrzeug im Inneren des auf das Bild projizierten Fahrzeugsmodells zu bestimmen.

7. Verfahren nach einem der Ansprüche 1 bis 6, wobei vor Schritt (d) ein Schritt der Extraktion einer begrenzten Gruppe von Bildern des Objektes ausgehend von aufgezeichneten Daten erfolgt, wobei der Vergleich der Schritte (d) und (f) auf der Grundlage dieser begrenzten Gruppe ausgeführt wird.

8. Verfahren nach einem der Ansprüche 1 bis 7, wobei vor Schritt (d) ein Schritt der Bildverarbeitung erfolgt, damit der Hintergrund entfernt wird und nur die Punkte in Bezug auf das Objekt bewahrt werden.

9. Verfahren nach einem der Ansprüche 1 bis 8, wobei im Laufe von Schritt (g) der Trajektorie $T_{i+1}$ die Wahrscheinlichkeit zugeordnet wird: min ($1, C_{i+1}/C_i$).

10. Verfahren nach Anspruch 9, wobei, wenn das Verhältnis $C_{i+1}/C_i$ kleiner als 1 ist, eine Zahl zwischen 0 und 1 zufällig bestimmt wird, wobei die Trajektorie $T_{i+1}$ beibehalten wird, wenn das Verhältnis $C_{i+1}/C_i$ größer als diese Zahl ist.

11. Verfahren nach Anspruch 9, wobei, wenn das Verhältnis $C_{i+1}/C_i$ kleiner als 1 ist, die Trajektorie $T_i$ beibehalten wird.

12. Verfahren nach einem der Ansprüche 1 bis 11, wobei in den Schritte (e) und (h) die Erzeugung einer Modelltrajektorie umgesetzt wird, indem zumindest ein Parameter der vorhergehenden Modelltrajektorie verändert wird.

13. Verfahren nach einem der Ansprüche 1 bis 10, wobei die in Schritt (i) vorgesehene Wiederholung n-1-Mal umgesetzt wird, wobei die Zahl n vorbestimmt, insbesondere kleiner oder gleich 200, ist.

14. Verfahren nach einem der Ansprüche 1 bis 9 und 11, wobei der Wiederholschritt (i) beendet wird, wenn die neue, in Schritt (h) erzeugte Modelltrajektorie während einer vorbestimmten Anzahl an Malen mit der vorhergehenden Modelltrajektorie identisch ist.

15. Verfahren nach einem der Ansprüche 1 bis 14, das einen Schritt (k) der Anzeige der beibehaltenen Trajektorie aufweist.

16. System zum Messen der Trajektorie eines passiven, beweglichen Objektes an einem bestimmten Ort, das aufweist:

zumindest einen Sensor für aufeinanderfolgende Bilder des Objektes bei seiner Verschiebung,

einen Speicher, der dazu angepasst ist, die Daten, die von dem zumindest einen Sensor ausgegeben werden, aufzuzeichnen,

eine Einrichtung zur Verarbeitung der Daten, **dadurch gekennzeichnet, dass** die Einrichtung zur Verarbeitung der Daten angepasst ist, die Daten entsprechend den Schritten (c) bis (j) des Verfahren nach einem der Ansprüche 1 bis 15 zu verarbeiten, und
eine Einrichtung zur Anzeige der beibehaltenen Modelltrajektorie.

17. System nach Anspruch 16, das eine Einrichtung zum Kalibrieren der Sensoren in Bezug auf ein GPS-Bezugssystem und/oder eine gemeinsame Zeitbasis aller Sensoren aufweist.

Fig.1

Fig.2a

Fig.2b

Fig.3a

Fig.3b

## Fig.4

## Fig.5

## Fig.7

## Fig.6

## Fig.8

## Fig.9

Fig.10

Fig.11

Fig.12

Fig.13

Fig.14

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. GOYAT ; T. CHÂTEAU ; L. TRASSOUDAINE ; L. MALATERRE ; A. RIOUALL.** trajectory measurement of vehicles : a new observation. *le compte rendu de la conférence RSS,* 2007
- **Y. GOYAT ; T. CHATEAU ; L. TRASSOUDAINE.** Tracking of vehicle trajectory by combining a camera and a laser rangefinder. *Machine Vision and Applications,* 2009, vol. 21
- **C. STAUFFER ; W. ERIC L. GRIMSON.** Learning patterns of activity using real-time tracking. *IEEE Transactions on Pattern Analysis and Machine Intelligence,* Août 2000, vol. 22 (8
- **GOYAT Y. ; CHATEAU TH. ; MALATERRE L. ; TRASSOUDAINE L.** Vehicle Trajectories Evaluation by Static Video Sensors. *ITSC06 2006 - 9th International IEEE Conference on Intelligent Transportation Systems,* 2006